# EUROPEAN PATENT APPLICATION

(11) **EP 4 024 296 A1**
(43) Date of publication of application: **06.07.2022**
(21) Application number: 21203122.3
(22) Date of filing: 18.10.2021
(51) Int. Cl.: G06N 20/00

(54) **INFORMATION PROCESSING PROGRAM, INFORMATION PROCESSING METHOD, AND INFORMATION PROCESSING DEVICE**

(30) Priority: 04.01.2021 JP 2021000274
(71) Applicant: FUJITSU LIMITED, Kawasaki-shi, Kanagawa 211-8588 (JP)
(72) Inventor: YAJIMA, Jun, Kawasaki-shi, Kanagawa, 211-8588 (JP)
(74) Representative: Hoffmann Eitle

(57) **Abstract**

An information processing program that causes at least one computer to execute a process, the process includes executing a prediction process on prediction target data input, by using a trained model; acquiring a plurality of prediction candidates for the prediction target data, and confidence of each of the prediction candidates; storing confidence ranking sequences which each of the plurality of the prediction candidates for the prediction target data are arranged in an order of the confidence, in a storage device; and detecting an adversarial example generation activity by the prediction target data, based on the confidence ranking sequences.

## Description

### FIELD

The embodiments discussed herein are related to an information processing program, and an information processing device.

### BACKGROUND

In recent years, there have been an increasing number of cases of classifying data using machine learning. The machine training process is divided into a training phase and a prediction phase. In the training phase, for example, a trained model is generated by a training process performed by inputting data for training and a correct answer label. In the prediction phase, and prediction process is performed using the trained model created in the training phase with prediction target data as input, and a classification result label is output as the result of the prediction process.

In the prediction process, when the prediction target data is input, a plurality of prediction candidates is obtained by the prediction process using the learned model, and the confidence is computed for each prediction candidate. Then, the prediction candidate with the maximum confidence value is output as the classification result label.

In an image classification system using machine learning, when a kind of noise called perturbations is applied to an input image, an event of misprediction the input image sometimes arises as a problem. For example, there is a case where the input image is mispredicted in the image classification system due to an adversarial attack against the trained model. Examples thereof include an attack that intentionally fabricates data that looks like A to the human eye, while the data is determined to be B in the prediction process using the trained model. As this data intentionally fabricated so as to cause an misprediction in the prediction process, there is data called an adversarial example or the like.

Note that, although the image data has been described here as an example, the adversarial example may be generated for any classification process as well as the classification process for the image. For example, in the process of classifying voice and classifying the content of a conversation, an adversarial example may also be generated in which noise that is unlikely to be perceived by humans is placed on voice data such that the content that is heard as a conversation of A by humans is determined to be B.

The adversarial example is generated by adding predetermined noise to the original image. This causes, for example, an event such as misprediction an image that is acknowledged as a panda by the human eye, as a gibbon in the prediction process. Thus, it is desirable to defend against attacks using this adversarial example.

Two approaches are conceivable as a scheme for countering attacks using the adversarial example. One is an approach that makes it difficult to fabricate the adversarial example. One of such the process is called adversarial training. The other is an approach that detects and removes the adversarial example..

The approach that makes it difficult to fabricate the adversarial example is a method to improve the resistance to the adversarial example by incorporating the adversarial example into the training data and performing an adversarial example that allows the classification result of the adversarial example to be classified as a correct target.

In contrast to this, the approach that detects and removes the adversarial example is a method to defend against an attack by the adversarial example by locating and removing the adversarial example from the input data prior to performing the prediction process and then performing the prediction process with correct data.

As the approach that detects and removes the adversarial example among these approaches, for example, there is a technique of preparing a second learning device that specializes in determining whether an adversarial example is involved, apart from a machine learning device that performs the determination process. For example, a large number of adversarial examples are generated for a training data set. Next, a label denoting that the adversarial example is not involved is attached to the original training data, a label denoting that the adversarial example is involved is attached to the generated adversarial examples, and machine learning is performed with the second learning device. This allows a determination result on whether data desired to be determined is an adversarial example to be output when the data desired to be determined is input to a learned learning model included in the second learning device.

Furthermore, as a machine learning technique, there is a technique of causing a sample data generator to learn until the distinction between data generated by the sample data generator and data received from a database disappear, and using the sample data after learning for training of a prediction model, or the like. Moreover, there is a technique of comparing the behavior between respective learning models using Bayesian statistical model checking on the basis of whether the execution results of two different learning models satisfy a logical expression.

U.S. Patent Application Publication No. 2020/0175383, and Japanese Laid-open Patent Publication No. 2020-004178 are disclosed as related art.

### SUMMARY

### [TECHNICAL PROBLEM]

However, in the technique using the second learning device that specializes in determining whether an adversarial example is involved, it takes time and effort for advance preparations because the adversarial example needs to be fabricated and learned in advance. For example, it is not realistic to comprehensively generate adversarial example data for images that can be the target of the prediction process, and it is difficult to improve the safety of machine learning.

Furthermore, in the technique of causing the sample data generator to learn, it is possible to generate the adversarial example by causing the sample data generator to learn using the adversarial example, but it is difficult to build a system that precisely detects the adversarial example using the generated adversarial example. In addition, in the technique of comparing the behavior between two learning models, a learning model having the resistance to the adversarial example may be generated by causing a second learning model to gain adversarial example characteristics, but it is difficult to build a system that precisely detects the adversarial example. Therefore, it is difficult for any of the techniques to improve the safety of machine learning by efficiently detecting and removing the adversarial example.

### [SOLUTION TO PROBLEM]

According to an aspect of the embodiments, an information processing program that causes at least one computer to execute a process, the process includes executing a prediction process on prediction target data input, by using a trained model; acquiring a plurality of prediction candidates for the prediction target data, and confidence of each of the prediction candidates; storing confidence ranking sequences which each of the plurality of the prediction candidates for the prediction target data are arranged in an order of the confidence, in a storage device; and detecting an adversarial example generation activity by the prediction target data, based on the confidence ranking sequences.

### [ADVANTAGIOUS EFFECT OF INVENTION]

The disclosed technique is achieved in view of the above, and an object thereof is to provide an information processing program, an information processing method, and an information processing device that improve the safety of machine learning.

### BRIEF DESCRIPTION OF DRAWINGS

FIG. 1 is a system configuration diagram illustrating an example of a machine learning system;
FIG. 2 is a block diagram of a machine learning system according to a first embodiment;
FIG. 3 is a diagram for explaining a confidence ranking sequence that occurs when an adversarial example generation activity is performed;
FIG. 4 is a flowchart of a prediction process accompanying an adversarial example activity by the machine learning system according to the first embodiment;
FIG. 5 is a block diagram of a machine learning system according to a second embodiment;
FIG. 6 is a flowchart of a confidence ranking sequence training process;
FIG. 7 is a flowchart of an adversarial example activity detection process accompanied by a prediction process, using an occurrence state of the confidence ranking sequences; and
FIG. 8 is a hardware configuration diagram of the machine learning system.

### DESCRIPTION OF EMBODIMENTS

Embodiments of an information processing program, an information processing method, and an information processing device disclosed by the present application will be described in detail below based on the drawings. Note that the following embodiments do not limit the information processing program, the information processing method, and the information processing device disclosed in the present application.

### [First Embodiment]

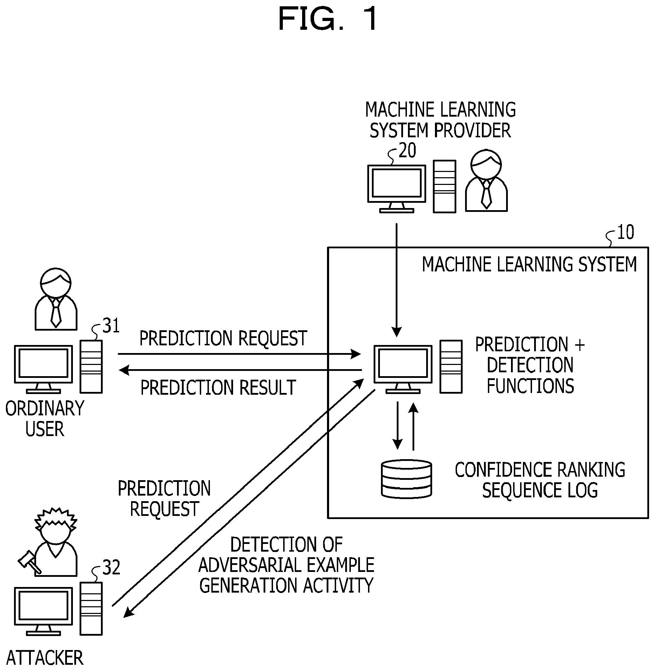

FIG. 1 is a system configuration diagram illustrating an example of a machine learning system. The machine learning system 10 is a device that executes a training process for image classification and a classification process accompanying the detection of an adversarial example generation activity. The machine learning system 10 holds a confidence ranking sequence log, which is historical information on a confidence ranking sequence in which a plurality of prediction candidates for prediction target data is arranged in order of confidence. The confidence represents a ratio at which the prediction candidate resembles the prediction target data, which is, for example, a value indicating a possibility that the prediction target data is equal to the prediction candidate. If the confidence is high, there is a high possibility that the correct answer is obtained when the classification result for the prediction target data is treated as being equal to the prediction candidate, and conversely, if the confidence is low, there is a high possibility that an error is produced when the prediction target data is classified as the prediction candidate.

A training data input terminal 20 is a terminal of a machine learning system provider who provides training data for machine learning and causes the machine learning system 10 to perform machine learning. Terminals 31 and 32 are terminals that provide the prediction target data to the machine learning system 10 to make a prediction request and acquire the prediction result for the provided prediction target data to provide the acquired prediction result to users. The terminal 31 is a terminal whose user is an ordinary user who does not intend to generate the adversarial example. The terminal 32 is a terminal whose user is an attacker who intends to generate the adversarial example.

The machine learning system 10 accepts an input of training data and a correct answer label from the training data input terminal 20. Then, the machine learning system 10 executes supervised machine learning using the acquired training data and correct answer label and generates a learned prediction model.

Furthermore, the machine learning system 10 accepts an input of the prediction target data from the terminal 31. Then, the machine learning system 10 classifies the prediction target data using the learned prediction model for the acquired prediction target data and executes a prediction process. This prediction process can be said to be a classification process for classifying which data the prediction target data corresponds to. In addition, the machine learning system 10 detects an adversarial example generation activity using the confidence ranking sequence log together with this prediction process and determines that this prediction process does not correspond to the adversarial example generation activity. Thereafter, the machine learning system 10 transmits the prediction result to the terminal 31.

Meanwhile, the user of the terminal 32 is an attacker, and the machine learning system 10 accepts an input of prediction target data for the purpose of generating the adversarial example from the terminal 32. Then, the machine learning system 10 classifies the prediction target data using the learned prediction model for the acquired prediction target data and executes the prediction process. In addition, the machine learning system 10 detects the adversarial example generation activity using the confidence ranking sequence log together with this prediction process and determines that this prediction process is the adversarial example generation activity. Thereafter, the machine learning system 10 notifies the terminal 32 of the detection of the adversarial example generation activity as a prediction result. Alternatively, the machine learning system 10 sends back no result to the terminal 32 after the detection. As another alternative, after the detection, the machine learning system 10 generates a pseudo prediction result that is not consistently the correct prediction result for the terminal 32 and transmits the generated pseudo prediction result to the terminal 32.

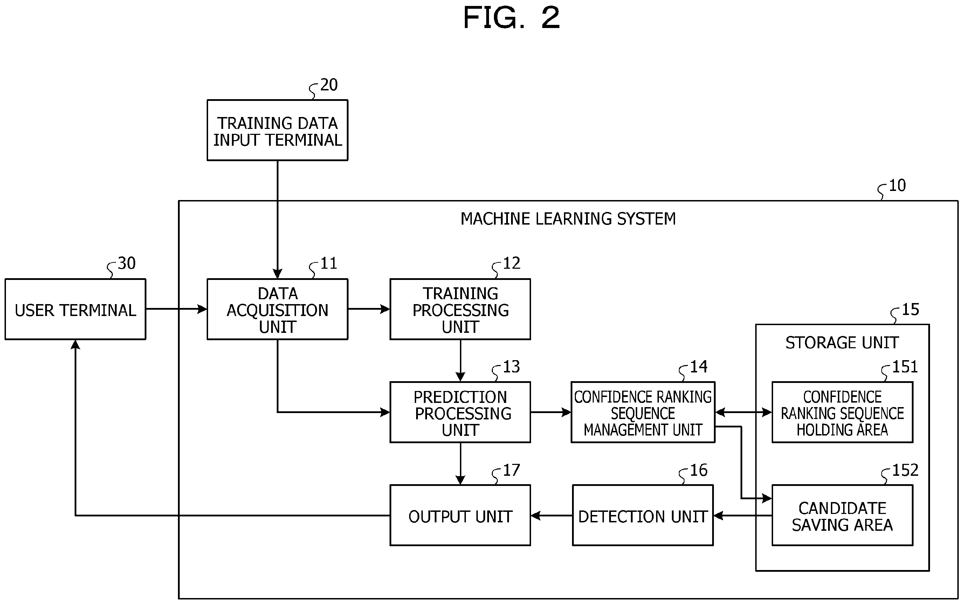

FIG. 2 is a block diagram of a machine learning system according to a first embodiment. Next, the details of the machine learning system 10 will be described with reference to FIG. 2. Here, the terminals 31 and 32 in a case where the user is in an unknown state as to whether to be an ordinary user or an attacker will be collectively described as user terminals 30. The machine learning system 10 includes a data acquisition unit 11, a training processing unit 12, a prediction processing unit 13, a confidence ranking sequence management unit 14, a storage unit 15, a detection unit 16, and an output unit 17.

In the training phase, the data acquisition unit 11 receives the training data and the correct answer label from the training data input terminal 20. Then, the data acquisition unit 11 outputs the acquired training data and correct answer label to the training processing unit 12.

Furthermore, in the prediction phase, the data acquisition unit 11 receives a prediction request containing the prediction target data from the user terminal 30. Then, the data acquisition unit 11 outputs the acquired prediction target data to the prediction processing unit 13.

The training processing unit 12 accepts an input of the training data and the correct answer label from the data acquisition unit 11 in the training phase. Then, the training processing unit 12 performs supervised machine learning using the acquired training data and correct answer label and learns the prediction model. Thereafter, the training processing unit 12 outputs the learned prediction model to the prediction processing unit 13.

In the prediction phase, the prediction processing unit 13 accepts the learned prediction model from the training processing unit 12. Furthermore, the prediction processing unit 13 accepts an input of the prediction target data from the data acquisition unit 11. Then, the prediction processing unit 13 executes the following prediction process on the prediction target data specified in the request for the prediction process. Actually, the training processing unit 12 stores the learned prediction model in the storage unit 15 or the like, and the prediction processing unit 13 reads out the prediction model stored in the storage unit 15 or the like at the time point of performing the prediction to perform the prediction. However, for convenience of explanation, this has been described as such that the prediction processing unit 13 acquires the learned prediction model from the training processing unit 12.

The prediction processing unit 13 designates a plurality of prediction candidates predicted to be the prediction target data, using the learned prediction model and the prediction target data. Next, the prediction processing unit 13 calculates confidence of each prediction candidate. Thereafter, the prediction processing unit 13 outputs all the prediction candidates and the confidence of each prediction candidate to the confidence ranking sequence management unit 14.

Here, in the present embodiment, the prediction processing unit 13 outputs information on all the prediction candidates, but is not limited to this embodiment. Other than determination target ranks and part may be excluded at this stage.

Furthermore, the prediction processing unit 13 selects a prediction result for the prediction target data from the plurality of prediction candidates, using the confidence of each prediction candidate. For example, the prediction processing unit 13 selects a prediction candidate with the highest confidence as the prediction result for the prediction target data. Then, the prediction processing unit 13 outputs the prediction result to the output unit 17.

The storage unit 15 is a storage device such as a hard disk or a memory. The storage unit 15 has a confidence ranking sequence holding area 151 that temporarily stores the confidence ranking sequence and a candidate saving area 152 that holds a confidence ranking sequence that is a candidate for detecting the adversarial example generation activity. The storage unit 15 having this confidence ranking sequence holding area 151 corresponds to an example of "storage device". Furthermore, the confidence ranking sequence holding area 151 corresponds to an example of "first storage unit", and the candidate saving area 152 corresponds to an example of "second storage unit".

The confidence ranking sequence management unit 14 accepts an input of all the prediction candidates and the confidence of each prediction candidate from the prediction processing unit 13. Then, the confidence ranking sequence management unit 14 generates a confidence ranking sequence in which the prediction candidates are arranged in descending order of confidence. Thereafter, the confidence ranking sequence management unit 14 stores the generated confidence ranking sequence in the confidence ranking sequence holding area 151 of the storage unit 15. Furthermore, when the storage area of the confidence ranking sequence holding area 151 is exhausted, the confidence ranking sequence management unit 14 overwrites the confidence ranking sequence in an order from the oldest.

Next, the confidence ranking sequence management unit 14 determines whether a confidence ranking sequence in which the prediction candidates are arranged in the same manner as the newly stored confidence ranking sequence is found among existing confidence ranking sequences other than the newly stored confidence ranking sequence held by the confidence ranking sequence holding area 151. In the following, the existing confidence ranking sequences other than the newly stored confidence ranking sequence are simply referred to as "existing confidence ranking sequences". In addition, the fact that the prediction candidates are arranged in the same manner in a plurality of confidence ranking sequences is expressed that the confidence ranking sequences "match".

When a confidence ranking sequence that matches the newly stored confidence ranking sequence is found among the existing confidence ranking sequences, the confidence ranking sequence management unit 14 acquires this matching confidence ranking sequence from the confidence ranking sequence holding area 151 and stores the acquired confidence ranking sequence in the candidate saving area 152. This confidence ranking sequence that matches the newly stored confidence ranking sequence corresponds to an example of "duplicate confidence ranking sequence". At this time, the confidence ranking sequence management unit 14 deletes the confidence ranking sequence taken out from the confidence ranking sequence holding area 151. This enables the reduction in the amount of the confidence ranking sequences held by the confidence ranking sequence holding area 151. Furthermore, the confidence ranking sequence management unit 14 permits duplication of the confidence ranking sequences in the candidate saving area 152 when storing. Here, in the present embodiment, the confidence ranking sequence management unit 14 moves the confidence ranking sequence to the candidate saving area 152 in order to reduce the amount of the confidence ranking sequences in the confidence ranking sequence holding area 151. However, the confidence ranking sequence management unit 14 is not limited to this embodiment and may copy the confidence ranking sequence to the candidate saving area 152 when, for example, the confidence ranking sequence holding area 151 has a large capacity.

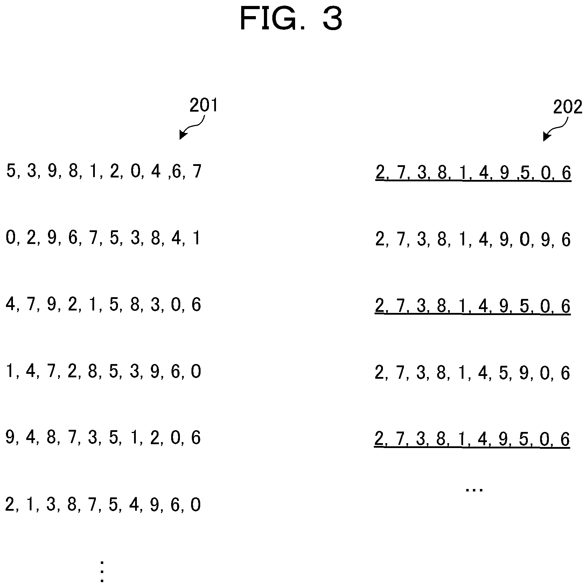

FIG. 3 is a diagram for explaining a confidence ranking sequence that occurs when the adversarial example generation activity is performed. Here, the features of the confidence ranking sequence that occurs when the adversarial example generation activity is performed will be described with reference to FIG. 3. A confidence ranking sequence group 201 in FIG. 3 is an example in which classification results are arranged in an order from the highest in confidence and corresponds to an example of the occurrence state of ordinary confidence ranking sequences. When normal prediction requests that are not associated with the adversarial example generation activity are made successively, the confidence ranking sequences that occurred have variations in content, and confidence ranking sequences having the same array rarely develop in a short period of time, as indicated by the confidence ranking sequence group 201.

In contrast to this, a confidence ranking sequence group 202 corresponds to an example of the occurrence state of confidence ranking sequences when the adversarial example generation activity is performed. When the adversarial example generation activity is performed, noise inserted to generate the adversarial example is miniature compared to the entire data, and in the adversarial example generation activity, the prediction process by the prediction processing unit 13 using data in which this noise has been adjusted is repeated many times in the machine learning system 10. In the case of data with small differences, the prediction candidates and their confidence are almost the same. Accordingly, when the adversarial example generation activity is performed, the same confidence ranking sequence appears repeatedly in a short period of time, as indicated by the confidence ranking sequence group 202. Thus, when the same confidence ranking sequence occurs at a certain frequency or higher, it is considered that there is a high possibility of the adversarial example activity being performed. From the above, the detection unit 16 performs the following process as a process of detecting the adversarial example generation activity.

Returning to FIG. 2, the description will be continued. When the confidence ranking sequence is newly stored in the confidence ranking sequence holding area 151, the detection unit 16 determines whether n-1 confidence ranking sequences that match the newly stored confidence ranking sequence are found in the candidate saving area 152. For example, the detection unit 16 determines whether n confidence ranking sequences are given by totaling the newly stored confidence ranking sequence and the matching confidence ranking sequences stored in the candidate saving area 152.

When n-1 confidence ranking sequences that match the newly stored confidence ranking sequence are found in the candidate saving area 152, the detection unit 16 detects the input of the prediction target data that is the source of the confidence ranking sequence newly stored in the confidence ranking sequence holding area 151, as the adversarial example generation activity. Then, the detection unit 16 notifies the output unit 17 of the detection of the adversarial example generation activity.

Here, in the present embodiment, the confidence ranking sequence management unit 14 and the detection unit 16 detect the adversarial example generation activity using a confidence ranking sequence in which all the prediction candidates included in the confidence ranking sequence match. However, the adversarial example generation activity may be detected using a confidence ranking sequence in which a part of the confidence ranking sequence matches. For example, the confidence ranking sequence management unit 14 may store, in the candidate saving area 152, a confidence ranking sequence in which a predetermined number of prediction candidates match in descending order from a prediction candidate having the highest level confidence. Furthermore, the confidence ranking sequence management unit 14 may store, in the candidate saving area 152, a confidence ranking sequence in which a predetermined number of prediction candidates match in ascending order from a prediction candidate having the lowest confidence. In addition, the confidence ranking sequence management unit 14 may store, in the candidate saving area 152, a confidence ranking sequence in which a predetermined number of consecutive prediction candidates at a predetermined position in the confidence ranking sequence match. Besides, the confidence ranking sequence management unit 14 may store, in the candidate saving area 152, a confidence ranking sequence in which a predetermined number of inconsecutive prediction candidates at predefined positions in the confidence ranking sequence match, for example, using the second, fourth, sixth, and eighth places. In each case, the detection unit 16 detects the adversarial example generation activity when n-1 confidence ranking sequences that meet the condition in each case are found in the candidate saving area 152.

The output unit 17 accepts an input of the prediction result for the prediction target data from the prediction processing unit 13. Furthermore, when the adversarial example generation activity is detected, the output unit 17 accepts a notification of the detection of the adversarial example generation activity from the detection unit 16.

When not having accepted the notification of the detection of the adversarial example generation activity, the output unit 17 transmits the prediction result to the user terminal 30 of the requester of the prediction process. In contrast to this, when having accepted the notification of the detection of the adversarial example generation activity, the output unit 17 transmits the notification of the detection of the adversarial example generation activity to the user terminal 30 of the requester of the prediction process. Alternatively, the output unit 17 may send back no result to the terminal 32 after the detection. As another alternative, after the detection, the output unit 17 may generate a pseudo prediction result that is not consistently the correct prediction result for the terminal 32 and transmits the generated pseudo prediction result to the terminal 32.

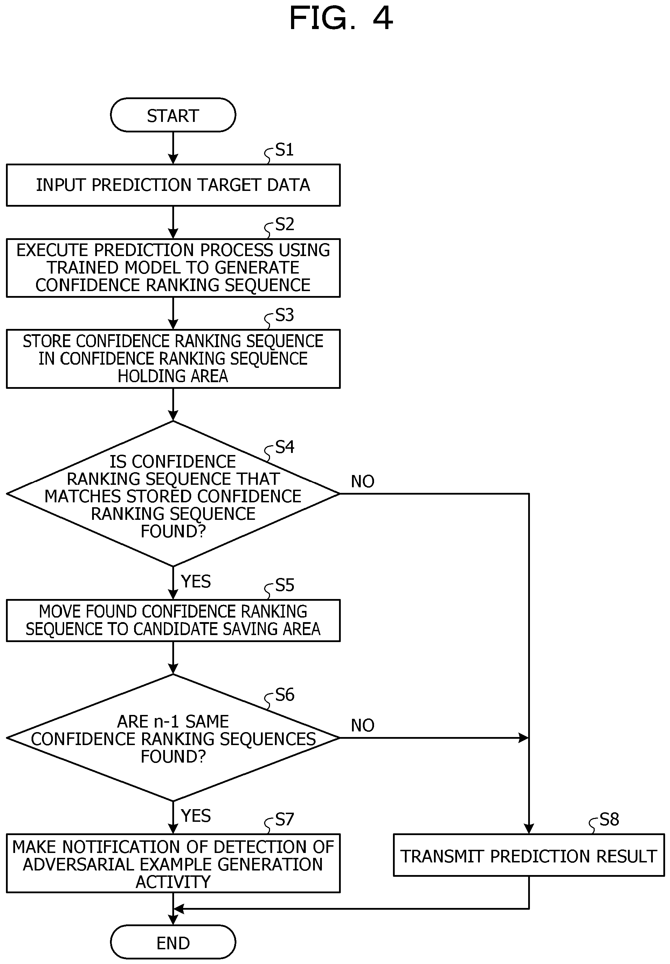

Next, the flow of the prediction process accompanying the adversarial example activity by the machine learning system 10 according to the first embodiment will be described with reference to FIG. 4. FIG. 4 is a flowchart of the prediction process accompanying the adversarial example activity by the machine learning system according to the first embodiment.

The data acquisition unit 11 accepts an input of a prediction request containing the prediction target data from the user terminal 30 (step S1). Then, the data acquisition unit 11 outputs the acquired prediction target data to the prediction processing unit 13.

The prediction processing unit 13 accepts an input of the prediction target data from the data acquisition unit 11. Next, the prediction processing unit 13 executes the prediction process on the prediction target data using the learned prediction model acquired from the training processing unit 12. Then, the prediction processing unit 13 designates the prediction candidates for the prediction target data and also works out the confidence of each prediction candidate. The prediction processing unit 13 selects a prediction result for the prediction target data from among the prediction candidates, using the confidence. Thereafter, the prediction processing unit 13 outputs the prediction result to the output unit 17. Furthermore, the prediction processing unit 13 outputs each prediction candidate and the confidence of each prediction candidate to the confidence ranking sequence management unit 14. The confidence ranking sequence management unit 14 arranges the plurality of prediction candidates input from the prediction processing unit 13 in the order of confidence and generates a confidence ranking sequence (step S2).

Thereafter, the confidence ranking sequence management unit 14 stores the generated confidence ranking sequence in the confidence ranking sequence holding area 151 of the storage unit 15 (step S3).

Next, the confidence ranking sequence management unit 14 determines whether a confidence ranking sequence that matches the confidence ranking sequence newly stored in the confidence ranking sequence holding area 151 is found among the existing confidence ranking sequences held in the confidence ranking sequence holding area 151 (step S4).

When no confidence ranking sequence that matches the newly stored confidence ranking sequence is found among the existing confidence ranking sequences (step S4: negative), the detection of the adversarial example generation activity by the detection unit 16 does not occur, and the prediction process proceeds to step S8.

When a confidence ranking sequence that matches the newly stored confidence ranking sequence is found among the existing confidence ranking sequences (step S4: affirmative), the confidence ranking sequence management unit 14 moves the confidence ranking sequence that matches the newly stored confidence ranking sequence to the candidate saving area 152 of the storage unit 15 (step S5). Here, in the present embodiment, the movement to the candidate saving area 152 is made, but the confidence ranking sequence management unit 14 may copy the confidence ranking sequence to the candidate saving area 152.

The detection unit 16 determines whether n-1 same confidence ranking sequences that match the newly stored confidence ranking sequence are found in the candidate saving area 152 (step S6).

When n-1 same confidence ranking sequences that match the newly stored confidence ranking sequence are found in the candidate saving area 152 (step S6: affirmative), the detection unit 16 notifies the output unit 17 of the detection of the adversarial example activity. The output unit 17 notifies the user terminal 30 as the transmission source of the prediction request of the detection of the adversarial example activity (step S7). Alternatively, the output unit 17 transmits the pseudo prediction result.

In contrast to this, when n-1 same confidence ranking sequences that match the newly stored confidence ranking sequence are not found in the candidate saving area 152 (step S6: negative), the detection of the adversarial example generation activity by the detection unit 16 does not occur, and the prediction process proceeds to step S8.

When the adversarial example generation activity is not detected, the output unit 17 transmits the prediction result input from the prediction processing unit 13 to the user terminal 30 as the transmission source of the prediction request (step S8).

Here, in the present embodiment, in order to keep the size of the confidence ranking sequence holding area 151 small, the matching confidence ranking sequence is moved to the candidate saving area 152. However, if a large size of the confidence ranking sequence holding area 151 can be ensured, the candidate saving area 152 may not be used.

In that case, the confidence ranking sequence management unit 14 accumulates the confidence ranking sequences until the confidence ranking sequence holding area 151 overflows. Then, when the confidence ranking sequence holding area 151 overflows, the confidence ranking sequence management unit 14 deletes the oldest confidence ranking sequence and stores a new confidence ranking sequence.

The detection unit 16 searches the confidence ranking sequences accumulated in the confidence ranking sequence holding area 151 to determine whether n matching confidence ranking sequences are found and, when n matching confidence ranking sequences are found, detects the adversarial example generation activity.

Besides, it is also possible to execute the process by the following procedure. For example, the places of steps S4 and S6 in the order are exchanged, and the detection unit 16 initially determines whether n-1 confidence ranking sequences that are the same as the confidence ranking sequence for the input are found in the candidate saving area 152. Then, if the determination result is Yes, the detection unit 16 determines that there is the adversarial example generation activity. Furthermore, if the determination result is No, the detection unit 16 determines whether the same confidence ranking sequence is found in the confidence ranking sequence holding area 151 and, when the same confidence ranking sequence is found, copies the found confidence ranking sequence to the candidate saving area 152 to end with no detection, while simply ending with no detection if no same confidence ranking sequence is found.

As described above, the machine learning system according to the present embodiment accumulates a confidence ranking sequence in which the prediction candidates acquired by the prediction process for the prediction target data are arranged in the order of confidence. Then, the machine learning system detects and makes a notification of the adversarial example generation activity when a predetermined number of confidence ranking sequences determined to be the same confidence ranking sequences are gathered.

This allows to make a notification of the detection of the adversarial example generation activity in response to a prediction request suspected to be the adversarial example generation activity and to suppress the adversarial example generation activity without performing the pre-training of the adversarial examples. Therefore, the machine learning system may be protected from attacks and the safety may be improved by a simplified method without performing a process with high load such as the pre-training of the adversarial examples.

Note that the terminals 31 and 32 in FIG. 1 may be the same terminal. In such a case, there is a case where the user is identified by user authentication. In that case, the confidence ranking sequence may be held for each user, and the detection may be performed in units of users. Furthermore, even when user authentication is performed, it is conceivable to conduct administration by holding the confidence ranking sequences not for each user, and a method combining both is also conceivable. In addition, similarly, the terminals 31 and 32 and the machine learning system 10 in FIG. 1 may all be the same terminal or system.

### (First Modification)

For example, the confidence ranking sequence management unit 14 may assign prediction process numbers to the prediction processes executed by the prediction processing unit 13 in sequence and attach the assigned prediction process numbers to respective confidence ranking sequences relevant to the respective prediction processes to store the confidence ranking sequences with the prediction process numbers assigned in the confidence ranking sequence holding area 151 and the candidate saving area 152.

In that case, the detection unit 16 acquires the prediction process number of the confidence ranking sequence newly stored in the confidence ranking sequence holding area 151 and acquires the oldest prediction process number among matching confidence ranking sequences held in the candidate saving area 152. Then, the detection unit 16 subtracts the acquired oldest prediction process number from the prediction process number of the newly stored confidence ranking sequence and, if the resultant value does not exceed a predefined limit value, determines whether n-1 matching confidence ranking sequences are found in the candidate saving area. In that case, if n-1 matching confidence ranking sequence are found in the candidate saving area, the detection unit 16 detects the adversarial example generation activity.

In contrast to this, when the value obtained by subtracting the acquired oldest prediction process number from the prediction process number of the newly stored confidence ranking sequence exceeds the predefined limit value, the detection unit 16 deletes a confidence ranking sequence having the oldest prediction process number from the candidate saving area 152.

This allows to detect the adversarial example generation activity when the same confidence ranking sequence occurs while a certain number of prediction processes are performed, and to improve the performance of detecting the adversarial example activity.

### [Second Embodiment]

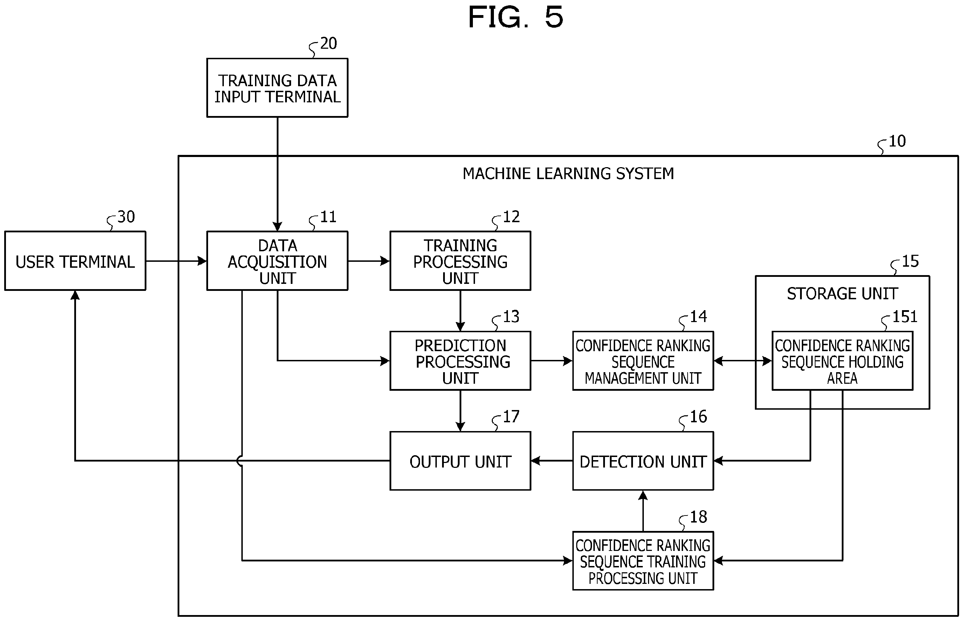

FIG. 5 is a block diagram of a machine learning system according to a second embodiment. The machine learning system 10 according to the present embodiment is different from the machine learning system of the first embodiment in training the occurrence state of the confidence ranking sequences using another machine learning device and using the result of the training to detect the adversarial example generation activity from the occurrence state of the confidence ranking sequences. In the following explanation, descriptions of functions of respective units similar to those of the first embodiment will be omitted.

After training the prediction model, the machine learning system 10 executes a confidence ranking sequence training phase in which the occurrence state of the confidence ranking sequences is learned in a state without attacks. Thereafter, the machine learning system 10 executes the following prediction phase. For example, the machine learning system 10 performs the prediction process when accepting a prediction request and simultaneously performs outlier detection as to whether a state without attacks has been put in place, from the occurrence state of the confidence ranking sequences. Then, the machine learning system 10 detects the adversarial example activity when an outlier value that does not correspond to the state without attacks is obtained as a determination result. The operation of the machine learning system 10 to detect the adversarial example activity accompanied by the confidence ranking sequence training phase and the prediction process, using the occurrence state of the confidence ranking sequences will be described in detail below.

In the confidence ranking sequence training phase after the training of the prediction model is completed, a data acquisition unit 11 accepts an input of a plurality of pieces of prediction target data for training the occurrence state of the confidence ranking sequences, which are not associated with the adversarial example generation activity, from a training data input terminal 20. Then, the data acquisition unit 11 successively outputs each piece of the input prediction target data to a prediction processing unit 13. Furthermore, the data acquisition unit 11 requests a confidence ranking sequence training processing unit 18 to execute training of the occurrence state of the confidence ranking sequences.

In the confidence ranking sequence training phase, the prediction processing unit 13 performs the prediction process using each piece of the input prediction target data and works out the prediction candidates and the confidence of each prediction candidate when the adversarial example generation activity is not involved. Then, the prediction processing unit 13 successively outputs the prediction candidates and the confidence of each prediction candidate when the adversarial example generation activity for each piece of the prediction target data is not involved, to a confidence ranking sequence management unit 14.

Furthermore, when receiving the prediction target data from the data acquisition unit 11 in the prediction phase, the prediction processing unit 13 executes the prediction process using the prediction target data acquired in a manner similar to the first embodiment. Then, the prediction processing unit 13 outputs the prediction result to an output unit 17 and also outputs the prediction candidates for the acquired prediction target data to the confidence ranking sequence management unit 14.

In the confidence ranking sequence training phase, the confidence ranking sequence management unit 14 arranges the prediction candidates acquired from the prediction processing unit 13 in the order of confidence and performs a process of creating a confidence ranking sequence when the adversarial example generation activity is not involved, successively on the prediction candidates for the respective pieces of the prediction target data. Then, the confidence ranking sequence management unit 14 stores the confidence ranking sequence when the adversarial example generation activity is not involved, in a confidence ranking sequence holding area 151 in order such that the newest one comes at the beginning.

Furthermore, in the prediction phase, the confidence ranking sequence management unit 14 arranges the prediction candidates acquired from the prediction processing unit 13 in the order of confidence and performs a process of creating a prediction target confidence ranking sequence for the prediction target data input from a user terminal 30. Then, the confidence ranking sequence management unit 14 stores the confidence ranking sequence for the prediction target data in the confidence ranking sequence holding area 151 in order such that the newest one comes at the beginning.

In the confidence ranking sequence training phase, the confidence ranking sequence training processing unit 18 determines whether the confidence ranking sequences when the adversarial example generation activity is not involved have been accumulated in the confidence ranking sequence holding area 151. When a predetermined number of confidence ranking sequences when the adversarial example generation activity is not involved have not been accumulated, the confidence ranking sequence training processing unit 18 waits until the predetermined number of confidence ranking sequences are accumulated.

In contrast to this, when the predetermined number of confidence ranking sequences when the adversarial example generation activity is not involved have been accumulated, the confidence ranking sequence training processing unit 18 collectively acquires j confidence ranking sequences from the beginning as one confidence ranking sequence group. The confidence ranking sequence training processing unit 18 generates a new confidence ranking sequence group every time a new confidence ranking sequence is stored in the confidence ranking sequence training processing unit 18. Then, the confidence ranking sequence training processing unit 18 executes unsupervised determination machine learning using the generated plurality of confidence ranking sequence groups to learn a determination model that locates a confidence ranking sequence group when the adversarial example generation activity is not involved. Subsequently, the confidence ranking sequence training processing unit 18 outputs the determination model that locates the confidence ranking sequence group when the adversarial example generation activity is not involved, to a detection unit 16.

The detection unit 16 accepts an input of the determination model that locates the confidence ranking sequence group when the adversarial example generation activity is not involved, from the confidence ranking sequence training processing unit 18. Furthermore, when the prediction process is performed using the prediction target data, the detection unit 16 determines whether a predetermined number of confidence ranking sequences have been accumulated in the confidence ranking sequence holding area 151. When the predetermined number of confidence ranking sequences have not been accumulated, the detection unit 16 waits until the predetermined number of confidence ranking sequences are accumulated.

In contrast to this, when the predetermined number of confidence ranking sequences have been accumulated, the detection unit 16 collectively acquires j confidence ranking sequences from the beginning as one confidence ranking sequence group. Then, the detection unit 16 determines whether the confidence ranking sequence group acquired using the determination model is associated with no adversarial example generation activity. When an outlier value denoting that the confidence ranking sequence group is associated with the adversarial example generation activity is obtained as a determination result, the detection unit 16 detects the adversarial example generation activity. Then, the detection unit 16 outputs the detection of the adversarial example generation activity to the output unit 17.

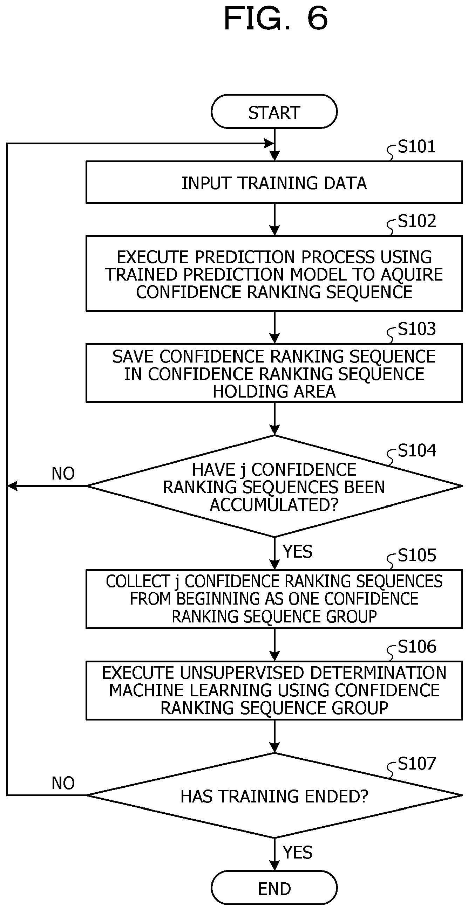

Next, the flow of the confidence ranking sequence training process will be described with reference to FIG. 6. FIG. 6 is a flowchart of the confidence ranking sequence training process.

The data acquisition unit 11 accepts an input of training data when the adversarial example generation activity is not involved, from the training data input terminal 20 (step S101). Thereafter, the data acquisition unit 11 outputs the acquired training data to the prediction processing unit 13.

The prediction processing unit 13 accepts an input of the training data when the adversarial example generation activity is not involved, from the data acquisition unit 11. Next, the prediction processing unit 13 executes the prediction process using the learned prediction model to generate a plurality of prediction candidates for the training data when the adversarial example generation activity is not involved. Thereafter, the prediction processing unit 13 outputs the generated plurality of prediction candidates together with the confidence of each prediction candidate to the confidence ranking sequence management unit 14. The confidence ranking sequence management unit 14 arranges the plurality of prediction candidates acquired from the prediction processing unit 13 in an order from the highest in confidence and acquires a confidence ranking sequence for the training data when the adversarial example generation activity is not involved (step S102).

Next, the confidence ranking sequence management unit 14 stores the confidence ranking sequence for the training data when the adversarial example generation activity is not involved, in the confidence ranking sequence holding area 151 of a storage unit 15 in order from the newest at the beginning (step S103).

The confidence ranking sequence training processing unit 18 determines whether a predetermined number of, namely, j confidence ranking sequences have been accumulated in the confidence ranking sequence holding area 151 (step S104). When j confidence ranking sequences have not been accumulated in the confidence ranking sequence holding area 151 (step S104: negative), the confidence ranking sequence training process returns to step S101.

In contrast to this, when j confidence ranking sequences have been accumulated in the confidence ranking sequence holding area 151 (step S104: affirmative), the confidence ranking sequence training processing unit 18 collects j confidence ranking sequences from the beginning as one confidence ranking sequence group (step S105).

Next, the confidence ranking sequence training processing unit 18 executes unsupervised determination machine learning using the generated confidence ranking sequence group (step S106).

Thereafter, the confidence ranking sequence training processing unit 18 determines whether the training has ended (step S107). For example, the confidence ranking sequence training processing unit 18 determines that the determination machine learning has ended, at a time point when the training is performed a predefined number of times.

When the training has not ended (step S107: negative), the confidence ranking sequence training process returns to step S101. In contrast to this, when it is determined that the training has ended (step S107: affirmative), the confidence ranking sequence training processing unit 18 outputs the determination model generated by the determination machine learning to the detection unit 16 and ends the confidence ranking sequence training process.

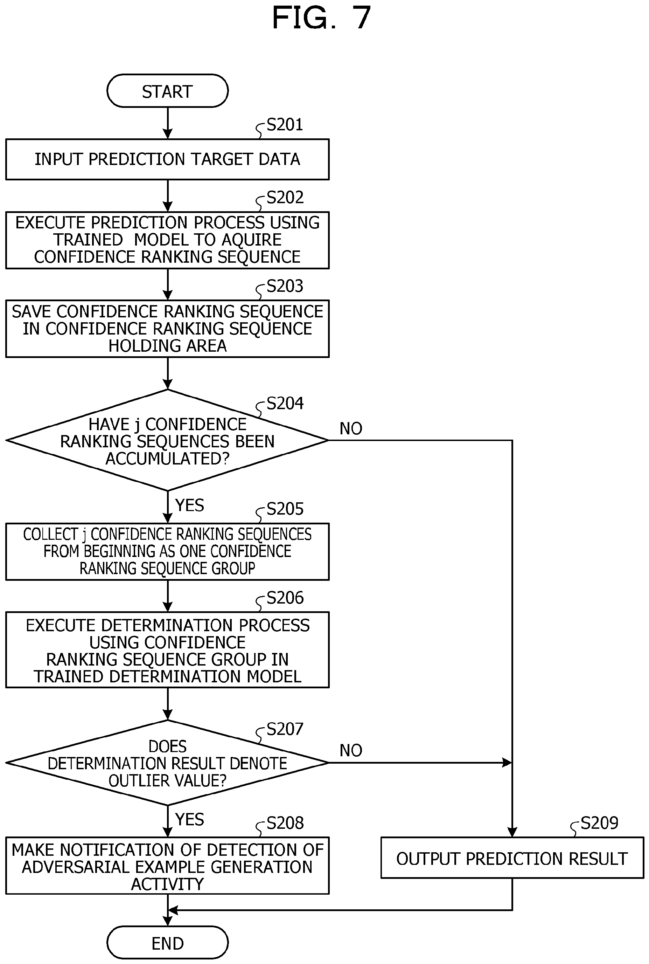

Next, the flow of an adversarial example activity detection process accompanied by the prediction process, using the occurrence state of the confidence ranking sequences will be described with reference to FIG. 7. FIG. 7 is a flowchart of the adversarial example activity detection process accompanied by the prediction process, using the occurrence state of the confidence ranking sequences.

The data acquisition unit 11 accepts an input of the prediction target data from the user terminal 30 (step S201). Next, the data acquisition unit 11 outputs the acquired prediction target data to the prediction processing unit 13.

The prediction processing unit 13 accepts an input of the prediction target data from the data acquisition unit 11. Next, the prediction processing unit 13 executes the prediction process using the learned prediction model to generate a plurality of prediction candidates for the acquired prediction target data. Thereafter, the prediction processing unit 13 outputs the generated plurality of prediction candidates together with the confidence of each prediction candidate to the confidence ranking sequence management unit 14. The confidence ranking sequence management unit 14 arranges the plurality of prediction candidates acquired from the prediction processing unit 13 in an order from the highest in confidence and acquires a confidence ranking sequence for the prediction target data (step S202).

Next, the confidence ranking sequence management unit 14 stores the confidence ranking sequence for the prediction target data in the confidence ranking sequence holding area 151 of the storage unit 15 in order from the newest at the beginning (step S203).

The detection unit 16 determines whether a predetermined number of, namely, j confidence ranking sequences have been accumulated in the confidence ranking sequence holding area 151 (step S204). When j confidence ranking sequences have not been accumulated in the confidence ranking sequence holding area 151 (step S204: negative), the confidence ranking sequence training process proceeds to step S209. In this case, the detection unit 16 does not detect the adversarial example generation activity, and the output unit 17 outputs the prediction result by the prediction processing unit 13 to the user terminal 30 (step S209).

In contrast to this, when j confidence ranking sequences have been accumulated in the confidence ranking sequence holding area 151 (step S204: affirmative), the detection unit 16 collects j confidence ranking sequences from the beginning as one confidence ranking sequence group (step S205).

The detection unit 16 executes a determination process as to whether no adversarial example generation activity is involved, on the generated confidence ranking sequence group using the learned determination model (step S206).

When the determination result denotes an outlier value (step S207: affirmative), the detection unit 16 notifies the output unit 17 of the detection of the adversarial example generation activity. The output unit 17 notifies the user terminal 30 of the detection of the adversarial example generation activity (step S208) .

In contrast to this, when the determination result does not denote an outlier value (step S207: negative), the output unit 17 outputs the prediction result by the prediction processing unit 13 to the user terminal 30 (step S209).

This brings an end to one prediction process. The machine learning system 10 repeats the prediction process illustrated in the flowchart in FIG. 7 each time the prediction target data is input from the user terminal 30.

As described above, the machine learning system according to the present embodiment learns the determination model in advance using the confidence ranking sequence in a state in which the adversarial example generation activity is not involved, and uses the learned determination model to determine whether a state in which the adversarial example generation activity is not involved has been put in place. This enables more accurate detection of the adversarial example generation activity. Furthermore, it is not needed to save the log, and resources may be effectively used. Moreover, the machine learning system according to the present embodiment learns the determination model and detects the adversarial example generation activity, using the confidence ranking sequence group obtained by collecting the confidence ranking sequences as time-series data. This allows to detect the adversarial example generation activity more appropriately.

### (Modifications)

The machine learning system 10 may append a label representing whether the adversarial example generation activity is involved, to data including data when the adversarial example generation activity was performed, which has been created in advance, and perform supervised training to create a determination model. A modification will be described below.

The prediction processing unit 13 accepts, from the data acquisition unit 11, an input of training data including data when the adversarial example generation activity was performed, which has been created in advance, in which a label representing whether the adversarial example generation activity is involved is appended to each piece of the training data. Then, the prediction processing unit 13 performs the prediction process to create a plurality of prediction candidates for the training data and attaches a label representing whether the adversarial example generation activity is involved, to the created prediction candidates to output the labeled prediction candidates to the confidence ranking sequence management unit 14.

The confidence ranking sequence management unit 14 acquires the prediction candidates acquired from the prediction processing unit 13 to create the confidence ranking sequence by arranging the acquired prediction candidates in the order of confidence and attaches the label to the created confidence ranking sequence to store the labeled confidence ranking sequence in the confidence ranking sequence holding area 151.

The confidence ranking sequence training processing unit 18 acquires a predetermined number of confidence ranking sequences from the beginning of the confidence ranking sequences stored in the confidence ranking sequence holding area 151 in the order of generation to create the confidence ranking sequence group. Then, the confidence ranking sequence training processing unit 18 learns the determination model for detecting the adversarial example generation activity, by supervised training using the confidence ranking sequence group to which a label representing whether the adversarial example generation activity is involved is appended. Thereafter, the confidence ranking sequence training processing unit 18 outputs the learned determination model to the detection unit 16.

The detection of the adversarial example generation activity by the detection unit 16 using the learned determination model is similar to the second embodiment.

As described above, it is also possible to generate a determination model for detecting the adversarial example generation activity, using data including the data when the adversarial example generation activity was performed, which has been constructed in advance. In this case as well, more accurate detection of the adversarial example generation activity is enabled.

### [Third Embodiment]

Next, a third embodiment will be described. A machine learning system 10 according to the present embodiment is also represented in FIG. 2. The machine learning system 10 according to the present embodiment detects the adversarial example generation activity when the actual frequency of appearance has gone greatly beyond the frequency of appearance of each confidence ranking sequence worked out in advance. In the following explanation, descriptions of operations of respective units similar to those of the first embodiment will be omitted.

A confidence ranking sequence management unit 14 limits the number of confidence ranking sequences stored in a candidate saving area 152. In the present embodiment, the confidence ranking sequence management unit 14 deletes the confidence ranking sequences from the oldest one in order from the oldest when a predefined size of the candidate saving area 152 is exceeded. Moreover, the confidence ranking sequence management unit 14 designates the number of pieces that can be stored, for each confidence ranking sequence. For example, the confidence ranking sequence management unit 14 designates that up to 10 pieces can be saved for a first confidence ranking sequence and up to 30 pieces can be saved for a second confidence ranking sequence.

However, other methods may be adopted to manage the amount of data stored in the candidate saving area 152. For example, the confidence ranking sequence management unit 14 may manage data stored in the candidate saving area 152 by a method such as storing beforehand the date and time when the confidence ranking sequence was generated and erasing an older one when a certain number of days have passed.

Furthermore, the confidence ranking sequence management unit 14 may designate the number of pieces that can be stored, for each confidence ranking sequence, using n relevant to the number of pieces stored in the candidate saving area 152, which is a threshold value for detecting the adversarial example generation activity to be described below. By using this n, the confidence ranking sequence management unit 14 is enabled to manage the area of the candidate saving area 152 more efficiently.

Next, a detection unit 16 will be described. The adversarial examples vary in ease of fabrication depending on the data to be used. For example, according to the data to be used, there is a case where the adversarial example is generated after a large number of the same confidence ranking sequences occur, and there is a case where the adversarial example is generated with a small number of occurrences of the same confidence ranking sequences.

Thus, the detection unit 16 detects the adversarial example generation activity when n-1 same confidence ranking sequences are gathered in the candidate saving area 152, and in the present embodiment, the value of this n is designated for each confidence ranking sequence. For example, the prediction processing unit 13 is caused to actually generate the adversarial example, and the value of n of each confidence ranking sequence is designated on the basis of the measurement result for the occurrence of each confidence ranking sequence. This sets the value of n to be large for a case where the adversarial example is generated after a large number of the same confidence ranking sequences occur and sets the value of n to be small for a case where the adversarial example is generated with a small number of occurrences of the same confidence ranking sequences.

Furthermore, even in the case of the prediction target data when the adversarial example generation activity is not involved, a bias to some extent is caused in the frequency of appearance of the confidence ranking sequence.

In this case as well, the value of n used to detect the adversarial example generation activity is designated for each confidence ranking sequence. For example, the prediction processing unit 13 is caused to perform the prediction process using data when the adversarial example generation activity is not involved, and n is designated on the basis of the frequency of appearance of the confidence ranking sequence that actually appeared. This sets n to be large when the frequency of occurrence is high and sets n to be small when the frequency of occurrence is low for the prediction target data when the adversarial example generation activity is not involved.

The detection unit 16 according to the present embodiment detects the adversarial example generation activity using a predefined value of n of each confidence ranking sequence.

For example, a case where n is set to 10 for a confidence ranking sequence that appears only five times after the prediction process using data when the adversarial example generation activity is not involved is executed one million times will be considered. In this case, the detection unit 16 detects the adversarial example generation activity when that confidence ranking sequence is observed ten or more times in one million times. In this case, the detection unit 16 may hold information on which place in the order the concerned prediction process was performed.

As described above, in the machine learning system according to the present embodiment, the number of confidence ranking sequences, which is a threshold value used for detecting the adversarial example generation activity, is made different for each confidence ranking sequence depending on the frequency of appearance of the same confidence ranking sequences when the adversarial example is generated. This allows to detect the adversarial example generation activity more accurately.

Furthermore, in the machine learning system according to the present embodiment, the number of confidence ranking sequences, which is a threshold value used for detecting the adversarial example generation activity, is made different for each confidence ranking sequence according to the frequency of appearance of confidence ranking sequences obtained from the prediction processes using data when the adversarial example generation activity is not involved. This allows to decrease misprediction of the adversarial example generation activity due to the bias of the frequency of appearance of the confidence ranking sequences obtained from the prediction processes using data when the adversarial example generation activity is not involved.

Note that, in all the embodiments described above, the case where the confidence is arranged in an order from the highest has been described. However, the confidence is not limited to this case and only needs to be arranged in a predetermined order. For example, the confidence may be arranged in an order from the lowest or may be arranged in a defined order (such as 2, 4, 6, 8 or 2, 8, 6, 4), or the like. As long as the arrangement is in line with any defined order, the machine learning systems can detect the adversarial example generation activity. Moreover, the confidence ranking sequence group also only needs to be in a predetermined order such as an order from the oldest instead of an order from the newest.

### (Hardware Configuration)

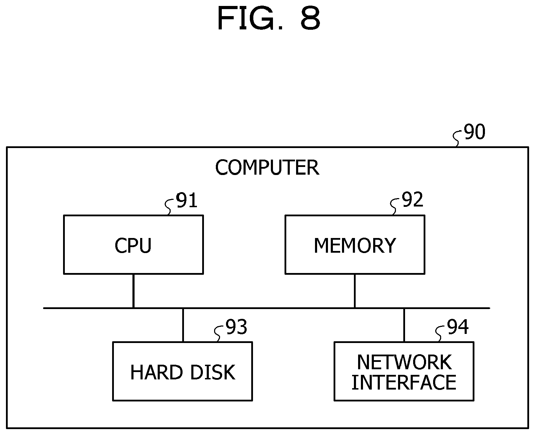

FIG. 8 is a hardware configuration diagram of the machine learning system. The machine learning system 10 described in each of the above embodiments can be implemented by, for example, a computer 90. The computer 90 includes a central processing unit (CPU) 91, a memory 92, a hard disk 93, and a network interface 94. The CPU 91 is connected to the memory 92, the hard disk 93, and the network interface 94 via a bus.

The network interface 94 is a communication interface for connecting to and communicating with the training data input terminal 20 and the user terminal 30. The network interface 94 controls communication between the CPU 91 and an external device.

The hard disk 93 is an auxiliary storage device. The hard disk 93 implements the function of the storage unit 15 and stores the confidence ranking sequence holding area 151 and the candidate saving area 152. Furthermore, the hard disk 93 stores various programs. For example, the hard disk 93 stores a program that implements the functions of the data acquisition unit 11, the training processing unit 12, the prediction processing unit 13, the confidence ranking sequence management unit 14, the storage unit 15, the detection unit 16, the output unit 17, and the confidence ranking sequence training processing unit 18 depicted in FIGs. 2 and 5.

The CPU 91 reads out the various programs from the hard disk 93 and expands the read-out programs on the memory 92 to execute the expanded programs. This allows the CPU 91 and the memory 92 to implement the functions of the data acquisition unit 11, the training processing unit 12, the prediction processing unit 13, the confidence ranking sequence management unit 14, the storage unit 15, the detection unit 16, the output unit 17, and the confidence ranking sequence training processing unit 18 depicted in FIGs. 2 and 5.

## Claims

1. An information processing program that causes at least one computer to execute a process, the process comprising:
executing a prediction process on prediction target data input, by using a trained model;
acquiring a plurality of prediction candidates for the prediction target data, and confidence of each of the prediction candidates;
storing confidence ranking sequences which each of the plurality of the prediction candidates for the prediction target data are arranged in an order of the confidence, in a storage device; and
detecting an adversarial example generation activity by the prediction target data, based on the confidence ranking sequences.

2. The information processing program according to claim 1, wherein the process further comprising
detecting the prediction target data as the adversarial example generation activity when a number of the duplicate confidence ranking sequences that match one of the confidence ranking sequences of the prediction target data is equal to or greater than a threshold value among the confidence ranking sequences.

3. The information processing program according to claim 2, wherein the storage device includes a first storage unit and a second storage unit,
the confidence ranking sequences are stored in the first storage unit, wherein
the process further comprising:
when a plurality of the duplicate confidence ranking sequences is found in the first storage unit, moving the plurality of the duplicate confidence ranking sequences other than a latest one of the confidence ranking sequences of the prediction target data, to the second storage unit; and
when the number of the duplicate confidence ranking sequences stored in the first storage unit and the second storage unit is equal to or greater than the threshold value, detecting the prediction target data as the adversarial example generation activity.

4. The information processing program according to claim 2, wherein the process further comprising:
executing the prediction process on a plurality of pieces of data that behave as the adversarial example generation activity by using the trained model to generate the confidence ranking sequences, and
determining the threshold value of each of the confidence ranking sequences based on the confidence ranking sequences.

5. The information processing program according to claim 2, wherein the process further comprising
determining the threshold value of each of the confidence ranking sequences based on a frequency of appearance of each of the confidence ranking sequences when the prediction process is executed on a plurality of pieces of data that do not behave as the adversarial example generation activity by using the trained model.

6. The information processing program according to claim 1, wherein the process further comprising:
executing the prediction process on the pieces of data that do not behave as the adversarial example generation activity by using the trained model to generate the confidence ranking sequences,
executing a determination machine learning by using the confidence ranking sequences to generate a determination model, and
detecting the adversarial example generation activity by the prediction target data by using the determination model for the confidence ranking sequences of the prediction target data.

7. An information processing method for a computer to execute a process comprising:
executing a prediction process on prediction target data input, by using a trained model;
acquiring a plurality of prediction candidates for the prediction target data, and confidence of each of the prediction candidates;
storing confidence ranking sequences which each of the plurality of the prediction candidates for the prediction target data are arranged in an order of the confidence, in a storage device; and
detecting an adversarial example generation activity by the prediction target data, based on the confidence ranking sequences.

8. The information processing method according to claim 7, wherein the process further comprising
detecting the prediction target data as the adversarial example generation activity when a number of the duplicate confidence ranking sequences that match one of the confidence ranking sequences of the prediction target data is equal to or greater than a threshold value among the confidence ranking sequences.

9. The information processing method according to claim 8, wherein the storage device includes a first storage unit and a second storage unit,
the confidence ranking sequences are stored in the first storage unit, wherein
the process further comprising:
when a plurality of the duplicate confidence ranking sequences is found in the first storage unit, moving the plurality of the duplicate confidence ranking sequences other than a latest one of the confidence ranking sequences of the prediction target data, to the second storage unit; and
when the number of the duplicate confidence ranking sequences stored in the first storage unit and the second storage unit is equal to or greater than the threshold value, detecting the prediction target data as the adversarial example generation activity.

10. The information processing method according to claim 8, wherein the process further comprising:
executing the prediction process on a plurality of pieces of data that behave as the adversarial example generation activity by using the trained model to generate the confidence ranking sequences, and
determining the threshold value of each of the confidence ranking sequences based on the confidence ranking sequences.

11. The information processing method according to claim 8, wherein the process further comprising
determining the threshold value of each of the confidence ranking sequences based on a frequency of appearance of each of the confidence ranking sequences when the prediction process is executed on a plurality of pieces of data that do not behave as the adversarial example generation activity by using the trained model.

12. The information processing method according to claim 7, wherein the process further comprising:
executing the prediction process on the pieces of data that do not behave as the adversarial example generation activity by using the trained model to generate the confidence ranking sequences,
executing a determination machine learning by using the confidence ranking sequences to generate a determination model, and
detecting the adversarial example generation activity by the prediction target data by using the determination model for the confidence ranking sequences of the prediction target data.

13. An information processing device comprising:
a prediction processing unit that executes a prediction process on prediction target data input, by using a trained model;
a data acquisition unit that acquires a plurality of prediction candidates for the prediction target data, and confidence of each of the prediction candidates;
a storage unit that stores confidence ranking sequences which each of the plurality of the prediction candidates for the prediction target data are arranged in an order of the confidence, in the one or more memories; and
a detection unit that detects an adversarial example generation activity by the prediction target data, based on the confidence ranking sequences.
